# EUROPÄISCHE PATENTSCHRIFT

(11) **EP 0 428 075 B1**
(45) Veröffentlichungstag und Bekanntmachung des Hinweises auf die Patenterteilung: **08.02.1995**
(21) Anmeldenummer: 90121447.8
(22) Anmeldetag: 09.11.1990
(51) Int. Cl.: B60K 17/08, F16H 3/083

(54) **Antriebsachseinheit und Schaltgetriebe**
Axle drive-unit and gearbox
Axe de transmission et boîte de vitesses

(30) Priorität: 14.11.1989 US 436853; 17.05.1990 US 525367
(43) Veröffentlichungstag der Anmeldung: 22.05.1991
(73) Patentinhaber: DEERE & COMPANY, Moline, Illinois 61265 (US)
(72) Erfinder: Love, Mahlon Lloyd, Geneseo, Illinois 61254 (US)
(74) Vertreter: Feldmann, Bernhard

(56) Entgegenhaltungen:
- FR-A- 2 342 437
- US-A- 3 354 738
- US-A- 3 386 302

## Beschreibung

Die Erfindung betrifft ein Schaltgetriebe gemäß den Merkmalen des Oberbegriffs des Patentanspruchs 1 sowie eine Antriebseinheit mit einem derartigen Schaltgetriebe.

Die übliche Kraftübertragung für Arbeitsfahrzeuge, wie beispielsweise Schlepper oder Mähdrescher, enthält eine Antriebsmaschine oder eine Verbrennungskraftmaschine, die eine Drehbewegung auf die Hauptkupplung überträgt. Die Hauptkupplung treibt ein Getriebe an, durch welches sich die Abtriebsdrehzahl beeinflussen läßt. Das Getriebe seinerseits steht mit einem Differential in Verbindung, welches die Drehbewegung auf eine rechte und eine linke Achse überträgt. Die Achsen sind jeweils mit einem Endantrieb ausgestattet, der die Antriebsräder und damit das Fahrzeug antreibt.

Hydrostatische Antriebssysteme stellen eine Methode zur stufenlosen Einstellung der Drehzahl des Endantriebes bereit. Bei einem hydrostatischen Antriebssystem treibt die Verbrennungskraftmaschine eine Hydraulikpumpe an, welche Flüssigkeit an einen Hydraulikmotor liefert. Der Hydraulikmotor seinerseits ist funktionsmäßig an den Endantrieb angeschlossen, um das Fahrzeug anzutreiben. Bei der Pumpeinheit kann es sich um eine reversible Verstellpumpe handeln, so daß eine Bedienungsperson durch Einstellung der Lage der Taumelscheibe das Fahrzeug innerhalb eines bestimmten Geschwindigkeitsbereiches stufenlos in Vorwärts- oder Rückwärtsrichtung fahren kann.

Der hydrostatische Antrieb arbeitet nur in einem begrenzten Drehzahlbereich wirkungsvoll, so daß Schaltgetriebe zwischen den Hydraulikmotor und den Endantrieb eingefügt werden, um den Nutzbereich der Hydraulikeinheit zu vergrößern. Insbesondere wurden den Hydraulikeinheiten von Mähdreschern Viergangschaltgetriebe nachgeschaltet, um den Geschwindigkeitsnutzbereich der Mähdrescher zu erweitern.

Eine mögliche Bauart für ein mechanisches Getriebe ist ein Schaltmuffengetriebe. Das Schaltmuffengetriebe weist parallele Wellen mit Zahnrädern auf, die in ständigem Eingriff miteinander stehen. In Neutralstellung laufen die Zahnräder frei. Sind sie jedoch eingerückt, so treten sie mit Hilfe verschiebbarer Schaltmuffen mit der zugehörigen Welle in verdrehsicheren Eingriff. Ist ein Zahnrad eingerückt, so ist es durch eine Schaltmuffe oder ein Kupplungsmittel auf der Welle festgesetzt. Das Zahnrad wird freigegeben, indem die Schaltmuffe gelöst wird, so daß das Zahnrad sich wieder frei drehen kann.

Die US-A-3,386,302 beschreibt ein Schaltgetriebe mit den Merkmalen des Oberbegriffes des Patentanspruchs 1, bei dem zwischen der axial verschiebbaren Schaltmuffe und der Ausgangswelle eine Kupplung angeordnet ist, die bei einer axialen Verschiebung der Schaltmuffe automatisch ein- bzw. ausgerückt wird, je nach dem, ob die Eingangsverzahnung der Schaltmuffe mit den Verzahnungen der Zwischenzahnräder oder eines Ausgangszahnrades der Getriebeeingangswelle in Eingriff steht oder nicht.

Um die Zahnräder in ihrer richtigen Lage zu halten ist es bekannt, die Seitenflächen der Zahnradzähne und den jeweiligen Zahngrund eines verschiebbaren Zahnrades abzuschrägen, so daß das Zahnrad während der Drehung gegen einen Anschlag vorgespannt wird. Es hat sich gezeigt, daß die abgeschrägten Oberflächen lediglich einen Winkel von fünf bis sieben Grad haben müssen.

Die mit der Erfindung zu lösende Aufgabe wird darin gesehen, eine kompakte und leicht montierbare Antriebsachse für Arbeitsfahrzeuge bereitzustellen. Ferner soll ein kompaktes, gedrungenes Schaltmuffengetriebe mit einer selbstzentrierenden, verschiebbaren Schaltmuffe angegeben werden.

Die Aufgabe wird durch die Merkmale des Anspruchs 1 bzw. 9 gelöst. Weitere vorteilhafte Ausgestaltungen und Weiterbildungen der Erfindung gehen aus den Unteransprüchen hervor.

Die erfindungsgemäße modular aufgebaute Antriebsachseinheit für ein Arbeitsfahrzeug weist ein linkes und ein rechtes Rad mit jeweils einer Planetenuntersetzungseinheit auf. Die Eingänge der Planetenuntersetzungseinheiten stehen über Achsabschnitte, die eine Querachse bilden, mit einem Differential in Verbindung. Der Eingang des Differentials ist senkrecht zur Querachse ausgerichtet und enthält eine Antriebswelle mit zwei Kegelverzahnungen. Die erste Kegelverzahnung steht mit einem entsprechenden Zahnrad des Differentials in Eingriff, während die zweite Kegelverzahnung durch ein Schaltmuffengetriebe angetrieben wird. Das Schaltmuffengetriebe, dessen Merkmale im Folgenden angegeben werden, ist parallel zur Querachse angeordnet und wird seinerseits durch einen Hydraulikmotor angetrieben, dessen Achse mit denen des Getriebes fluchtet. Die Kegelradantriebswelle ist ferner mit einer Ausgangsbaugruppe verbunden, die mit der Antriebswelle fluchtet und mit einer Notbremse gekoppelt ist.

Eine derartige Antriebsachseinheit läßt sich platzsparend ausbilden. Die modulare Bauweise ermöglicht einen wahlweisen Zusammenbau unterschiedlicher, kostengünstig herstellbarer Komponenten.

Das erfindungsgemäße Schaltgetriebe enthält; ein Getriebeeingangsteil, einen Getriebeausgang, Übertragungsmittel und Gangauswahlmittel. Vorzugsweise fluchten der Getriebeeingang und der -ausgang miteinander. Die Übertragungsmittel umfassen wenigstens eine, vorzugsweise jedoch drei parallel geschaltete, ortsfeste Nebenwellenzahnräder, die sternförmig um die Eingangsbüchse angeordnet sind. Die Nebenwellenzahnräder sind jeweils auf einer von drei ortsfesten, parallelen Nebenwellen angeordnet und haben je einen Eingangszahnkranz, der mit einer ersten Ausgangsverzahnung des Getriebeeingangsteiles kämmt. Ferner enthalten sie je zwei Ausgangsverzahnungen. Die Ausgangsverzahnungen der Nebenwellenzahnräder treiben zwei unabhängige Zwischenzahnräder an, die vorzugsweise konzentrisch um eine Ausgangswelle des Getriebes angeordnet sind. Bei den Gangauswahlmitteln handelt es sich um eine Gangwahlschaltmuffe, die drehfest mit der Ausgangswelle in Verbindung steht und konzentrisch zu dieser angeordnet ist. Die Gangwahlschaltmuffe läßt sich wahlweise derart axial auf der Ausgangswelle verschieben, daß ihre Eingangsverzahnung mit einer zweiten Ausgangsverzahnung der Eingangsbüchse oder dem ersten oder zweiten Zwischenzahnrad in Eingriff bringbar ist. Hierdurch lassen sich unterschiedliche Drehzahlübertragungsverhältnisse einstellen.

Um sicherzustellen, daß die Eingangsverzahnung der Gangwahlschaltmuffe bei eingelegtem Gang eine genaue Lage relativ zu einem der Zwischenzahnräder oder der zweiten Ausgangsverzahnung der Eingangsbüchse einnimmt, weist sie vorzugsweise eine selbstzentrierende Oberfläche auf. Diese selbstzentrierende Oberfläche enthält Zähne mit konkaven Seitenflächen und zwischen den Zähnen jeweils einen in axialer Richtung konkav ausgebildeten Zahngrund.

Das erfindungsgemäße Schaltgetriebe läßt sich relativ klein und kompakt ausbilden. Es besteht aus wenigen, einfachen Bauteilen, ist preiswert in seiner Herstellung und läßt eine hohe Drehmomentübertragung zu. Mit lediglich einer verschiebbaren Schaltmuffe lassen sich prinzipiell beliebig viele Drehzahlverhältnisse einstellen.

Gemäß einer bevorzugten Weiterbildung der Erfindung sind die Zwischenzahnräder konzentrisch zum Getriebeausgang und insbesondere zur Schaltmuffe angeordnet, nicht jedoch auf der Ausgangswelle oder der Schaltmuffe gelagert. Die radiale Lagerung der Zwischenzahnräder wird vielmehr zweckmäßigerweise von den zugehörigen, wenigstens drei Nebenwellenzahnrädern übernommen, zwischen denen sie angeordnet sind.

Das Getriebeeingangsteil ist vorzugsweise als Eingangsbüchse mit zwei Ausgangsverzahnungen ausgebildet, bei der eine Außenverzahnung mit dem Eingangszahnkranz des Nebenwellenzahnrads kämmt und eine Innenverzahnung mit dem Eingangszahnrad der Schaltmuffe in Eingriff bringbar ist.

Zur Auskupplung der Gänge ist es vorteilhaft, zwischen den Eingriffspositionen der Gänge neutrale Stellungen für die Schaltmuffe vorzusehen, bei deren Einnahme keine Kraftübertragung erfolgt. Diese neutralen Stellungen werden durch Zwischenräume gebildet, die zwischen der Abtriebsverzahnung des ersten Zwischenzahnrades, der Abtriebsverzahnung des zweiten Zwischenzahnrades und/oder der Ausgangsverzahnung des Getriebeeingangsteils liegen. Liegt die Eingangsverzahnung der Gangauswahlmittel in einem Zwischenraum, so steht sie mit keiner der Abtriebsverzahnungen in Eingriff.

Anhand der Zeichnung, die ein Ausführungsbeispiel der Erfindung zeigt, sollen die Erfindung sowie weitere Vorteile und vorteilhafte Weiterbildungen und Ausgestaltungen der Erfindung näher beschrieben und erläutert werden.

Es zeigt:
- Fig. 1: die schematische Ansicht einer Antriebsachseinheit gemäß vorliegender Erfindung,
- Fig. 2 und 3: Querschnittsdarstellungen einer modularen Antriebsachseinheit,
- Fig. 4: die Querschnittsdarstellung eines Schaltgetriebes,
- Fig. 4a: die perspektivische Teilansicht der Eingangsverzahnung einer Auswahlschaltmuffe und
- Fig. 5: die Rückansicht des in der Antriebsachseinheit verwendeten Dreiganggetriebes.

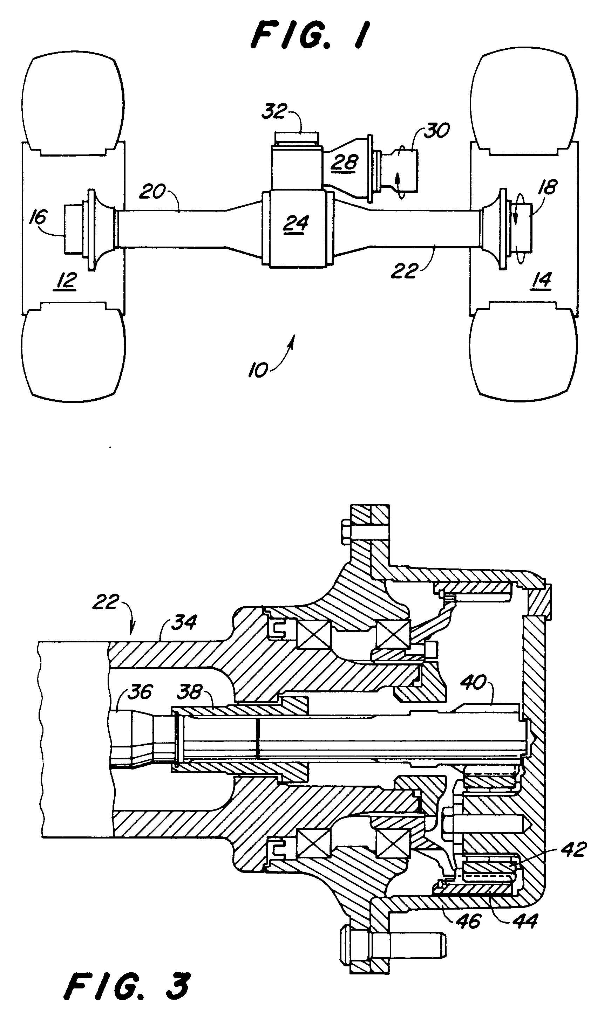

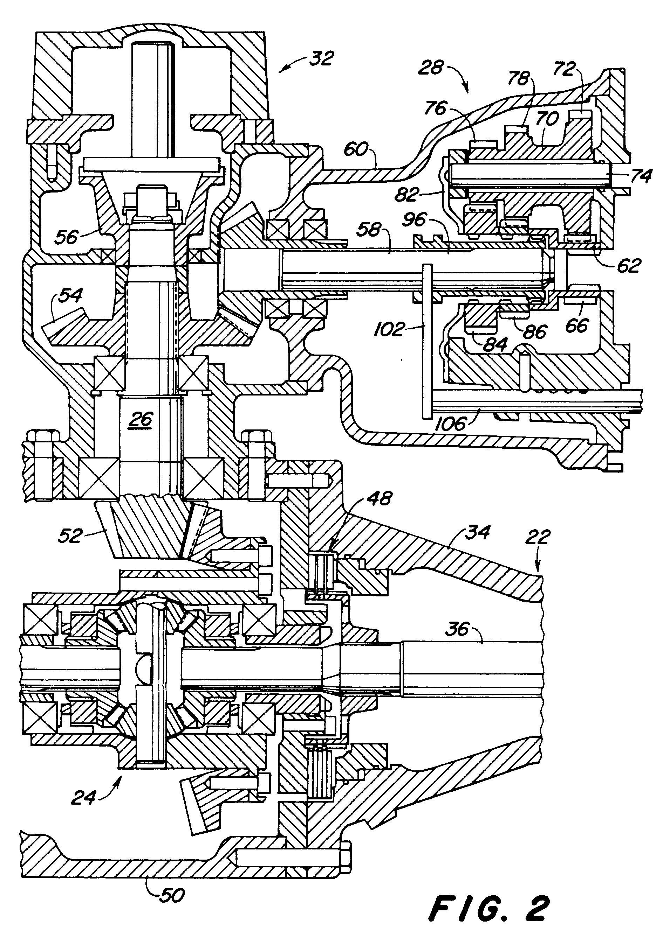

Fig. 1 stellt eine modulare (bausteinartig zusammengesetzte) Antriebsachseinheit eines Arbeitsfahrzeuges dar. Die Antriebsachseinheit 10 enthält ein linkes und rechtes Rad 12, 14, die mit einer linken bzw. rechten Planetenuntersetzungsgetriebeeinheit 16, 18 in Verbindung stehen. Letztere sind an einer linken und einer rechten Achse 20, 22 befestigt, welche ihrerseits mit einem Differential 24 verbunden sind. Die linke und rechte Achse 20, 22 bilden eine Querachse, die durch das Differential 24 verläuft. Eine Kegelradantriebswelle 26, die am deutlichsten aus Fig. 2 hervorgeht, treibt das Differential 24 an und ist senkrecht zu der Querachse 20, 22 ausgerichtet. Ferner steht ein Schaltmuffengetriebe 28 mit der Kegelradantriebswelle 26 in Verbindung und ist mit seinen Wellen 58, 74 parallel zu der Querachse 20, 22 ausgerichtet. Ein Hydraulikmotor 30 treibt das Schaltmuffengetriebe 28 und mit ihm die Antriebswelle 26, das Differential 24, die linke und rechte Achse 20, 22 und das linke und rechte Antriebsrad 12, 14 an. Die Kegelradantriebswelle 26 weist ferner eine mit ihr fluchtende Ausgangsbaugruppe auf, die mit einer Notbremse 32 verbunden ist.

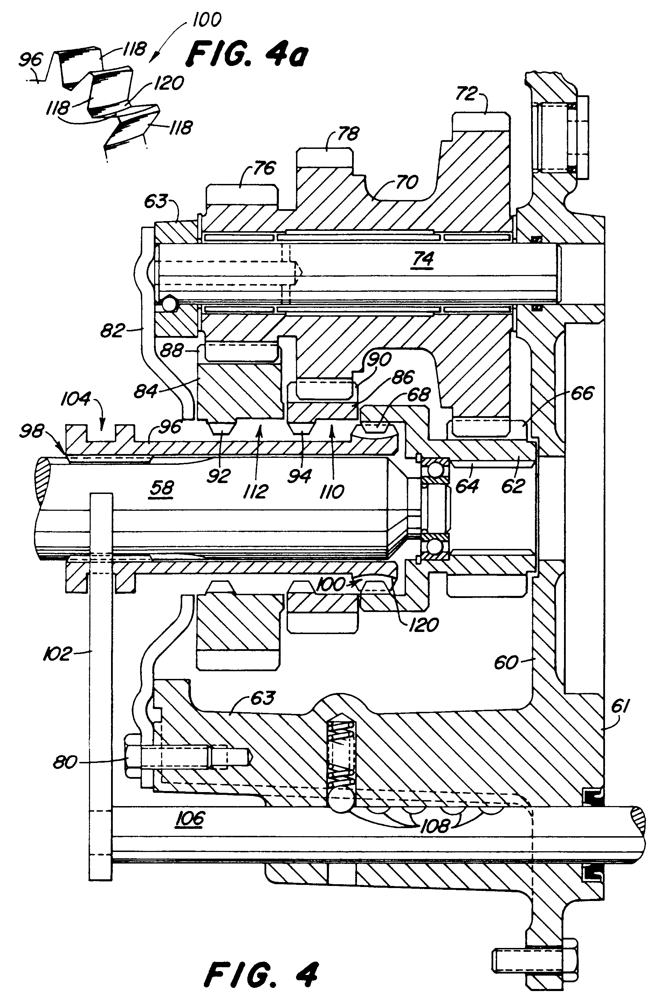

Die Figuren 2 und 3 sind Querschnittsansichten der modularen Antriebsachseinheit. Fig. 3 ist eine Teilquerschnittsdarstellung der rechten Achse 22 mit einem Achsgehäuse 34 und einer Antriebswelle 36. Die Antriebswelle 36 ist mit einer Lagerhülse 38 und an einem Ende mit einer äußeren Verzahnung 40 versehen. Die Verzahnung 40 treibt drei Planetenräder 42 an, von denen nur eins dargestellt ist. Die Planetenräder 42 ihrerseits treiben ein Ringrad 44 an, welches an der rechten Radnabe 46 und damit dem rechten Antriebsrad 14 befestigt ist. Die linke Planetenuntersetzungsgetriebeeinheit ist in gleicher Weise wie die rechte aufgebaut. Bei beiden handelt es sich um übliche, aus dem Stand der Technik bekannte Getriebeeinheiten.

Das andere Ende der rechte Antriebswelle ist an das Differential 24 angeschlossen. Es trägt ferner eine hydraulisch betätigbare Bremse 48, welche unmittelbar auperhalb des Differentialgehäuses 50 angeordnet ist. Die linke Antriebswelle weist eine entsprechende hydraulische Bremse auf. Das Differential und die Anordnung der hydraulischen Bremsen sind von bekannter Konfiguration. Das Differential ist von Natur aus modular aufgebaut, so daß sich verschiedenartige Differentialbaugruppen in das Differentialgehäuse ein- und ausschieben lassen. Beispielsweise kann ein Standarddifferential, ein schlupfbegrenztes Differential oder ein Antispind-Differential in das Differentialgehäuse eingesetzt werden.

Das Differential 24 wird durch eine senkrecht angeordnete Kegelradantriebswelle 26 angetrieben, die eine erste Kegelradverzahnung 52 und eine zweite Kegelradverzahnung 54 aufweist. Die Kegelradantriebswelle 36 trägt ferner eine mit ihr fluchtende Ausgangsbaugruppe 56. Die erste Kegelradverzahnung 52 dient dem Antrieb des Differentials 24, während die zweite Kegelradverzahnung 54 durch das Getriebe 28 angetrieben wird. Die fluchtende Ausgangsbaugruppe 56 steht mit einer Notbremse 32 in Verbindung. Bei der Notbremse 32 kann es sich ebenfalls um eine übliche, aus dem Stand der Technik bekannte Bremse handeln.

Die zweite Kegelradverzahnung 54 wird durch die Ausgangswelle 58 des Getriebes 28 angetrieben. Das Getriebe 28 ist in einem Gehäuse 60 untergebracht und enthält drei Gänge.

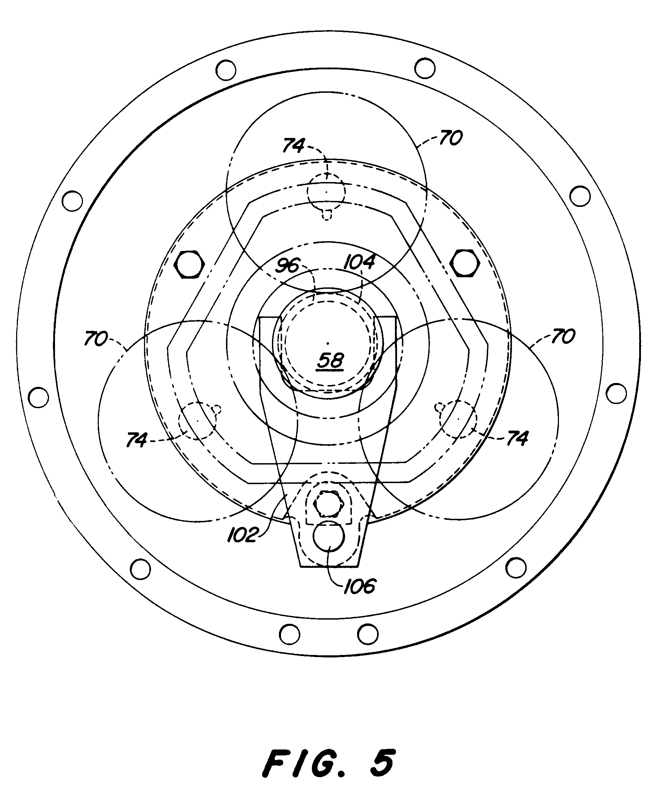

Das Getriebe 28 selbst geht am besten aus Fig. 4 hervor. Es enthält Getriebeeingangsmittel in Form von einer Eingangsbüchse 62 mit einer Innenverzahnung 64, die mit der Verzahnung einer Ausgangswelle des Hydraulikmotors 30 in Verbindung stehen. Ferner weist die Eingangsbüchse 62 eine erste Außenverzahnung 66 und eine zweite Innenverzahnung 68 auf. Die erste Außenverzahnung 66 treibt ein Übertragungsmittel an, welches drei sternartig angeordnete Nebenwellenzahnräder 70 aufweist, von denen in Fig. 4 nur eins dargestellt ist. Die Nebenwellenzahnräder 70 tragen Eingangszahnkränze 72, die mit der ersten Außenverzahnung 66 kämmen. Die drei sternartig angeordneten Nebenwellenzahnräder 70 sind, wie Fig. 5 zeigt, drehbar auf Nebenwellen 74 angeordnet, die sich parallel zu der Ausgangswelle 58 erstrecken. Jedes Nebenwellenzahnrad 70 enthält eine erste und eine zweite Ausgangsverzahnung 76, 78. Das Gehäuse 60 weist eine Grundplatte 61 mit sich nach innen erstreckenden Bereichen 63 auf. Diese bilden Befestigungseinrichtungen für die drei Nebenwellen 74. Eine ringförmige Halteplatte 82 ist durch Schrauben 80 an den Bereichen 63 befestigt.

Die erste und zweite Ausgangsverzahnung 76, 78 des Nebenwellenzahnrades 70 werden verwendet, um unabhängig ein erstes und zweites Zwischenzahnrad 84 und 86 anzutreiben. Letztere weisen jeweils eine äußere Eingangsverzahnung 88 bzw. 90 auf. Die Zwischenzahnräder 84 und 86 sind konzentrisch zur Antriebswelle 58 angeordnet und werden radial durch die drei sternförmig angeordneten Nebenwellenzahnräder 70 und axial durch die Halteplatte 82 in ihrer Lage gehalten. Das erste Zwischenzahnrad 84 enthält eine innere Abtriebsverzahnung 92, und das zweite Zwischenzahnrad 86 enthält ebenfalls eine innere Abtriebsverzahnung 94.

Auf der Antriebswelle 58 sind Gangauswahlmittel mit einer Gangwahlschaltmuffe 96 verschiebbar und mittels gegenseitiger Verzahnungen 98 drehfest angeordnet. Durch die Gangwahlschaltmuffe 96 lassen sich Verzahnungen in Eingriff bringen und die Drehbewegung des Getriebeeingangs auf die Antriebswelle 58 übertragen. Die Gangwahlschaltmuffe 96 enthält eine Eingangsverzahnung 100, welche wahlweise mit der zweiten Innenverzahnung 68 der Eingangsbüchse 62, der Abtriebsverzahnung 94 des zweiten Zwischenzahnrades 86 und der Abtriebsverzahnung 92 des ersten Zwischenzahnrades 84 gekoppelt werden kann. Die Gangwahlschaltmuffe 96 läßt sich durch eine Schaltgabel 102 auf der Antriebswelle 58 verschieben. Die Schaltgabel 102 greift dabei in eine Ringnut 104 der Gangschaltmuffe 96 ein. Die Schaltgabel 102 läßt sich durch eine Stange 106 verschieben, die Lageverrastungen 106 aufweist, durch die die Schaltlagen des Getriebes definiert sind. Die Stange 106 kann durch ein beliebiges, geeignetes Gestänge betätigt werden.

Die beiden Zwischenzahnräder 84, 86 und die Innenverzahnung 68 der Eingangsbüchse 62 definieren drei unterschiedliche Ausgangsdrehzahlen des Getriebes. Durch wahlweises Ineingriffbringen jede der Ausgangsverzahnungen 68, 94, 92 mit der Eingangsverzahnung 100 der Schaltmuf fe 96 läßt sich die Ausgangsdrehzahl der Antriebswelle 58 relativ zur vom Hydraulikmotor 30 abgegebenen Eingangsdrehzahl verändern. Ein erster und ein zweiter neutraler Zwischenraum 110, 112 befindet sich zwischen den Abtriebsverzahnungen 68, 94, 92. Genauer gesagt, befindet sich ein erster neutraler, zahnloser Zwischenraum 110 zwischen der Abtriebsverzahnung 94 und der Innenverzahnung 68 der Eingangsbüchse 62. Ein zweiter neutraler, zahnloser Zwischeraum 112 befindet sich zwischen der Abtriebsverzahnung 94 und der Abtriebsverzahnung 92. In diesen neutralen Zwischenräumen 110, 112 wird die Eingangsverzahnung 100 der Gangwahlschaltmuffe 96 nicht durch den Hydraulikmotor 30 angetrieben.

Wie in Fig. 4a gezeigt, enthält die Eingangsverzahnung 100 der Gangwahlschaltmuffe 96 eine Vielzahl von sich radial nach außen erstreckenden Zähnen. Jeder Zahn weist zwei konkave Seitenf lächen 118 auf, die eine Zentrierung der Eingangsverzahnung 100 der Gangwahlschaltmuffe 96 bei einem Eingriff mit einer Abtriebsverzahnung 68, 92, 94 bewirken. Ferner ist auch der Zahngrund 120 in axialer Richtung konkav ausgebildet. Diese konkaven Oberflächen 118, 120 dienen als zweiseitig wirkende, selbstzentrierende Oberflächen. Durch diese konkaven Oberflächen ist die Gangwahlschaltmuffe 96 bestrebt, sich auf der jeweiligen Abtriebsverzahnung 68, 92, 94 zu zentrieren.

Es ist wünschenswert, daß der Hydraulikmotor 30 durch eine nicht dargestellte reversible Verstellpumpe angetrieben wird, so daß für jede Gangeinstellung zusätzlich ein stufenlos verstellbarer Bereich zur Einstellung des Drehzahlübersetzungsverhältnisses gegeben ist. Hierbei kann die Drehzahl des Hydraulikmotors 30 leicht umgekehrt werden, ohne daß ein Umkehrgetriebe erforderlich ist.

Die vorliegende Erfindung stellt eine kompakte, modulare Antriebsachsbaugruppe mit einem stufenlos einstellbaren Drehzahlbereich zur Verfügung. Das Getriebe der Antriebsachseinheit ist einfach, stabil und unempfindlich in seinem Aufbau und stellt eine kompakte Einheit dar.

## Patentansprüche

1. Schaltgetriebe
- mit einem Getriebeeingangsteil (62), das wenigstens eine erste Ausgangsverzahnung (66) aufweist,
- mit einem Getriebeausgang, der eine Ausgangswelle (58) enthält,
- mit zwischen Getriebeeingang (62) und -ausgang (58) angeordneten Übertragungsmitteln, die wenigstens ein Nebenwellenzahnrad (70) und zwei Zwischenzahnräder (84, 86) umfassen, wobei jedes Nebenwellenzahnrad (70) wenigstens einen mit der ersten Ausgangsverzahnung (66) des Getriebeeingangsteiles (62) kämmenden Eingangszahnkranz (72) und eine erste und eine zweite mit jeweils einem der Zwischenzahnräder (84, 86) kämmende Ausgangsverzahnung (76, 78) aufweist, so daß die erste Ausgangsverzahnung (76) mit dem ersten Zwischenzahnrad (84) ein erstes Übertragungsverhältnis bildet und die zweite Ausgangsverzahnung (78) mit dem zweiten Zwischenzahnrad (86) ein zweites Übertragungsverhältnis bildet,
- mit einer auf der Ausgangswelle (58) konzentrisch angeordneten, axial verschiebbaren Schaltmuffe (96), die eine Eingangsverzahnung (100) trägt, durch die wahlweise das erste bzw. zweite Zwischenzahnrad (84, 86) mit dem Getriebeausgang (58) verbindbar ist, um die Drehbewegung des Getriebeeinganges über die Übertragungsmittel auf den Getriebeausgang zu übertragen,
dadurch gekennzeichnet, daß sowohl die Ausgangswelle (58) als auch die Schaltmuffe (96) miteinander zusammenwirkende Verzahnungen zur Übertragung von Drehmomenten aufweisen und daß die Eingangsverzahnung (100) der Schaltmuffe (96) eine Vielzahl radial nach außen weisender Zähne mit jeweils einem zwischen den Zähnen liegenden, einwärts gerichteten Zahngrund (120) enthält, wobei jeder Zahn konkave Seitenflächen (118) aufweist und/oder jeder Zahngrund (120) in axialer Richtung konkav derart ausgebildet ist, daß im Betrieb die Schaltmuffe (96) in eine Lage gedrängt wird, in der die Eingangsverzahnung (100) in zentriertem Eingriff mit der Abtriebsverzahnung (92, 94) eines Zwischenzahnrades (84, 86) oder einer Ausgangsverzahnung (68) des Getriebeeingangsteiles (62) steht.

2. Schaltgetriebe nach Anspruch 1, dadurch gekennzeichnet, daß wenigstens drei parallel geschaltete, sternförmig das Getriebeeingangsteil (62) umgebende Nebenwellenzahnräder (70) vorgesehen sind.

3. Schaltgetriebe nach Anspruch 1 oder 2, dadurch gekennzeichnet, daß das erste und das zweite Zwischenzahnrad (84, 86) konzentrisch um den Getriebeausgang (58) und insbesondere um die Schaltmuffe (96) angeordnet sind.

4. Schaltgetriebe nach Anspruch 2 oder 3, dadurch gekennzeichnet, daß das erste und zweite Zwischenzahnrad (84, 86) fliegend zwischen den wenigstens drei Nebenwellenzahnrädern (70) radial gelagert sind.

5. Schaltgetriebe nach einem der Ansprüche 1 bis 4, dadurch gekennzeichnet, daß das Getriebeeingangsteil (62) und der Getriebeausgang (58) miteinander fluchten.

6. Schaltgetriebe nach einem der Ansprüche 1 bis 5, dadurch gekennzeichnet, daß das Getriebeeingangsteil (62) eine zweite Ausgangsverzahnung (68) aufweist, und daß die Schaltmuffe (96) derart verschiebbar ist, daß ihre Eingangsverzahnung (100) zur Einstellung unterschiedlicher Drehzahlübersetzungsverhältnisse wahlweise mit einem Zwischenzahnrad (84, 86) oder mit der Ausgangsverzahnung (68) des Getriebeeingangsteiles (62) in Eingriff bringbar ist.

7. Schaltgetriebe nach einem der Ansprüche 1 bis 6, dadurch gekennzeichnet, daß das Getriebeeingangsteil als Büchse (62) mit wenigstens zwei Ausgangsverzahnungen (66, 68) ausgebildet ist, von denen eine Außenverzahnung (66) mit dem Eingangszahnkranz (72) des Nebenwellenzahnrads (70) kämmt und eine Innenverzahnung (68) mit der Schaltmuffe (96) in Eingriff bringbar ist.

8. Schaltgetriebe nach einem der Ansprüche 1 bis 7, dadurch gekennzeichnet, daß sich zwischen der Abtriebsverzahnung (92) des ersten Zwischenzahnrades (84) und/oder der Abtriebsverzahnung (94) des zweiten Zwischenzahnrades (86) und/oder der Ausgangsverzahnung (68) des Getriebeeingangsteiles (62) neutrale Zwischenräume (110, 112) befinden, so daß die Eingangsverzahnung (100) der Schaltmuffe (96) in einen Zwischenraum (110, 112) verschiebbar ist, in dem sie nicht in Eingriff mit einer der Verzahnungen (68, 92, 94) steht.

9. Antriebsachseinheit für ein Arbeitsfahrzeug, welches modular aufgebaut ist und folgende Baueinheiten enthält:
- ein linkes und ein rechtes Antriebsrad (12, 14) mit jeweils einem zugehörigen Nebenwellenreduktionsgetriebe (16, 18),
- eine linke und eine rechte Achse (20, 22), die sich an das jeweilige Nebenwellenreduktionsgetriebe (16, 18) anschließen, miteinander fluchten und eine Querachse bilden,
- eine Kegelradeinheit mit einer senkrecht zu der Querachse ausgerichteten Kegelradwelle (26), deren erstes Kegelrad (52) mit dem Eingangskegelrad des Differentials kämmt und deren zweites Kegelrad mit einem Ausgangskegelrad eines Schaltgetriebes (28) kämmt,
- ein Schaltgetriebe (28) nach einem der Ansprüche 1 bis 8, deren Wellen (58, 74) parallel zu der Querachse liegen, und
- einen Hydraulikmotor, der antriebsmäßig mit dem Getriebeeingangsteil (62) des Schaltgetriebes (28) verbunden ist.

## Claims

1. A change-speed gearbox with
- a gearbox input part (62) which comprises at least first output teeth (66),
- a gearbox output which includes an output shaft (58),
- transmission means which are arranged between the gearbox input (62) and output (58) and comprise at least one countershaft gearwheel (70) and two intermediate gearwheels (84, 86), wherein each countershaft gearwheel (70) has at least one input ring of teeth (72) meshing with the first output teeth (66) of the gearbox input part (62) and first and second output teeth (76, 78) meshing with the respective ones of the intermediate gearwheels (84, 86), so that the first output teeth (76) provide a first transmission ratio with the first intermediate gearwheel (84) and the second output teeth (78) provide a second transmission ratio with the second intermediate gearwheel (86),
- an axially movable shift sleeve (96) concentrically arranged on the output shaft (58) and carrying input teeth (100), through which the first and second intermediate gearwheels (84, 86) respectively can be coupled to the gearbox output (58), in order to transmit the rotary movement of the gearbox input through the transmission means to the gearbox output,
characterized in that both the output shaft (58) and the selector sleeve (96) have cooperating teeth for transmission of torque and in that the input teeth (100) of the selector sleeve (96) comprise a plurality of radially outwardly directed teeth, each with an inwardly directed tooth root (120) lying between the teeth, each tooth having concave flanks (118) and/or each tooth root (120) being so concavely formed in the axial direction that, in operation, the selector sleeve (96) is forced into a position in which the input teeth (100) are in centred engagement with the driving teeth (92, 94) of one of the intermediate gearwheels (84, 84) or output teeth (68) of the gearbox input part (62).

2. A change-speed gearbox according to claim 1, characterized in that at least three countershaft gearwheels (70) in parallel are provided, surrounding the gearbox input part (62) in a star.

3. A change-speed gearbox according to claim 1 or 2, characterized in that the first and second intermediate gearwheels (84, 86) are arranged concentrically about the gearbox output (58) and in particular about the selector sleeve (96).

4. A change-speed gearbox according to claim 2 or 3, characterized in that the first and second intermediate gearwheels (84, 86) are mounted radially floating between the at least three countershaft gearwheels (70).

5. A change-speed gearbox according to any of claims 1 to 4, characterized in that the gearbox input part (62) and the gearbox output (58) are in line with each other.

6. A change-speed gearbox according to any of claims 1 to 5, characterized in that the gearbox input part (62) has second output teeth (68) and in that the selector sleeve (96) is so movable that its input teeth (100) can be brought into engagement selectively with an intermediate gearwheel (84, 86) or with the output teeth (68) of the gearbox input part (62), for setting different speed transmission ratios.

7. A change-speed gearbox according to any of claims 1 to 6, characterized in that the gearbox input part is formed as a bush (62) with at least two sets of output teeth (66, 68), of which one set of external teeth (66) meshes with the input teeth (72) of the countershaft gearwheel (70) and a set of internal teeth (68) can be brought into engagement with the selector sleeve (96).

8. A change-speed gearbox according to any of claims 1 to 7, characterized in that neutral intermediate spaces (110, 112) are located between the driving teeth (92) of the first intermediate gearwheel (84) and/or the driving teeth (94) of the second intermediate gearwheel (86) and/or the output teeth (68) of the gearbox input part (62), so that the input teeth (100) of the selector sleeve (96) can be moved into an intermediate space in which they are not in engagement with one of the sets of teeth (68, 92, 94).

9. An axle drive unit for a working vehicle and which is of modular construction and includes the following components:
- left and right drive wheels (12, 14), each with an associated countershaft reduction gear (16, 18),
- left and right axles (20, 22), which are connected to the countershaft reduction gears (16, 18) respectively, are in line with each other and form a transverse axis,
- a bevel gear unit with a bevel gear shaft (26) perpendicular to the transverse axis and whose first bevel gear (52) meshes with the input bevel gear of the differential and whose second bevel gear meshes with an output bevel gear of a change-speed gearbox (28),
- a change-speed gearbox (28) according to any of claims 1 to 8, whose shafts (48, 74) are parallel to the transverse axis, and
- a hydraulic motor which is drivably connected to the gearbox input part (62) of the change-speed gearbox (28).

## Revendications

1. Boîte de vitesses comportant
- une partie d'entrée (62), qui comporte au moins une première denture de sortie (66),
- une sortie, qui contient un arbre de sortie (58),
- des moyens de transmission, qui sont disposés entre l'entrée (62) et la sortie (58) de la boîte de vitesses et comprennent au moins un pignon (70) d'arbre secondaire et deux pignons intermédiaires (84,86), chaque pignon (70) d'arbre secondaire possédant au moins une couronne dentée d'entrée (72), qui engrène avec la première denture de sortie (66) de la partie d'entrée (62) de la boîte de vitesses, et des première et seconde dentures de sortie (76,78), qui engrènent respectivement avec l'un des pignons intermédiaires (84,86), de sorte que la première denture de sortie (76) forme avec le premier pignon intermédiaire (84) un premier rapport de transmission et que la seconde denture de sortie (78) forme avec le second pignon intermédiaire (86) un second rapport de transmission,
- un manchon de commutation (96) déplaçable axialement, qui est disposé concentriquement sur l'arbre de sortie (58) et porte une denture d'entrée (100), au moyen de laquelle au choix le premier ou le second pignon intermédiaire (84,86) peut être relié à la sortie (58) de la boîte de vitesses, pour transmettre le mouvement de rotation de l'entrée de la boîte de vitesses à la sortie de cette dernière par l'intermédiaire des moyens de transmission,
caractérisée en ce qu'aussi bien l'arbre de sortie (58) que le manchon de commutation (96) possèdent des dentures, qui coopèrent entre elles, pour la transmission de couples, et que la denture d'entrée (100) du manchon de commutation (96) contient une multiplicité de dents qui s'étendent radialement vers l'extérieur et possèdent respectivement une base d'entre-dent (120) dirigée vers l'intérieur et située entre les dents, chaque dent possédant des surfaces latérales concaves (118) et/ou chaque fond d'entre-dent (120) étant réalisé avec une forme concave dans la direction axiale de telle sorte qu'en fonctionnement, le manchon de commutation (96) est refoulé dans une position, dans laquelle la denture d'entrée (100) engrène en position centrée avec la denture menée (92,94) d'un pignon intermédiaire (84,86) ou une denture de sortie (68) de la partie d'entrée (62) de la boîte de vitesses.

2. Boîte de vitesses selon la revendication 1, caractérisée en ce qu'il est prévu au moins trois pignons (70) d'arbres secondaires, qui sont montés en parallèle et entourent selon une disposition en étoile la partie d'entrée (62) de la boîte de vitesses.

3. Boîte de vitesses selon la revendication 1 ou 2, caractérisée en ce que les premier et second pignons intermédiaires (84,86) sont disposés concentriquement autour de la sortie (58) de la boîte de vitesses, notamment autour du manchon de commutation (96).

4. Boîte de vitesses selon la revendication 2 ou 3, caractérisée en ce que les premier et second pignons intermédiaires (84,86) sont montés radialement à l'état flottant entre les au moins trois pignons (70) d'arbres secondaires.

5. Boîte de vitesses selon l'une des revendications 1 à 4, caractérisée en ce que la partie d'entrée (62) de la boîte de vitesse et la sortie (58) de la boîte de vitesses sont alignées l'une sur l'autre.

6. Boîte de vitesses selon l'une des revendications 1 à 5, caractérisée en ce que la partie d'entrée (62) de la boîte de vitesses possède une seconde denture de sortie (68), et que le manchon de commutation (96) est déplaçable de telle sorte que sa denture d'entrée (100) peut être amenée à engrener au choix avec un pignon intermédiaire (84,86) ou avec la denture de sortie (68) de la partie d'entrée (62) de la boîte de vitesses, pour le réglage de différents rapports de transmission de vitesses de rotation.

7. Boîte de vitesses selon l'une des revendications 1 à 6, caractérisée en ce que la partie d'entrée de la boîte de vitesses est agencée sous la forme d'une douille (62) comportant deux dentures de sortie (66, 68), parmi lesquelles une denture extérieure (66) engrène avec la couronne dentée d'entrée (72) du pignon (70) d'arbre secondaire et une denture intérieure (68) peut être amenée à engrener avec le manchon de commutation (96).

8. Boîte de vitesses selon l'une des revendications 1 à 7, caractérisée en ce que des espaces intercalaires neutres (110,112) sont situés entre la denture menée (92) du premier pignon intermédiaire (84) et/ou la denture menée (94) du second pignon intermédiaire (86) et/ou de la denture de sortie (68) de la partie d'entrée (62) de la boîte de vitesses, de sorte que la denture d'entrée (100) du manchon de commutation (96) peut être amenée dans un espace intercalaire (110,112), dans lequel il n'engrène pas avec l'une des dentures (68,92,94).

9. Unité d'essieu moteur pour un véhicule de travail, qui est constituée de façon modulaire et contient les modules suivants :
- une roue motrice de gauche et une roue motrice de droite (12,14) comportant respectivement un engrenage réducteur associé (16,18) d'arbre secondaire,
- un essieu de gauche et un essieu de droite (1,22), qui se raccordent à l'engrenage réducteur respectif (16,18) d'arbre intermédiaire, sont alignés entre eux et forment un essieu transversal,
- une unité à pignons coniques comportant un arbre (26) à pignons coniques, qui est orienté perpendiculairement à l'axe transversal et dont le premier pignon conique (52) engrène avec le pignon conique du différentiel et dont le second pignon conique engrène avec un pignon conique de sortie d'une boîte de vitesses (28),
- une boîte de vitesses (28) selon l'une des revendications 1 à 8, dont les arbres (58, 74) sont parallèles à l'essieu transversal, et
- un moteur hydraulique, qui est relié, selon une liaison motrice, à la partie d'entrée (62) de la boîte de vitesses (28).
